# EUROPEAN PATENT APPLICATION

(11) **EP 2 757 292 A1**
(43) Date of publication of application: **23.07.2014**
(21) Application number: 14151703.7
(22) Date of filing: 20.01.2014
(51) Int. Cl.: F16J 15/12

(54) **Spiral gasket**

(30) Priority: 21.01.2013 JP 2013008705
(71) Applicant: Nippon Pillar Packing Co., Ltd., Osaka 532-0022 (JP)
(72) Inventor: Miyoshi, Takeshi, Hyogo, 669-1333 (JP); Suehiro, Atsushi, Hyogo, 669-1333 (JP)
(74) Representative: De Clercq, Ann G. Y.

(57) **Abstract**

A spiral gasket (1) which can suppress the deformation of an inner ring (13) and an outer ring (14) thereof is provided. The spiral gasket includes: a gasket body (12) having a body portion (12a), an inner peripheral empty winding portion (12b) which is formed on an inner periphery of the body portion, and an outer peripheral empty winding portion (12c) which is formed on an outer periphery of the body portion; an inner ring having an outer peripheral surface on which an inner ring pawl portion (13c) engageable with an inner peripheral surface of the inner peripheral empty winding portion is formed; and an outer ring (14) having an inner peripheral surface on which an outer ring pawl portion (14c) engageable with an outer peripheral surface of the outer peripheral empty winding portion (12c) is formed. The number of turns of the inner peripheral empty winding portion (12b) and the number of turns of the outer peripheral empty winding portion (12c) are set to 5 to 10. A predetermined first gap (S1) is formed between the inner peripheral surface of the inner peripheral empty winding portion and a portion of the outer peripheral surface of the inner ring except for the inner ring pawl portion. A predetermined second gap (S2) is formed between the outer peripheral surface of the outer peripheral empty winding portion and a portion of the inner peripheral surface of the outer ring except for the outer ring pawl portion.

## Description

### TECHNICAL FIELD

The present invention relates to a spiral gasket.

### BACKGROUND ART

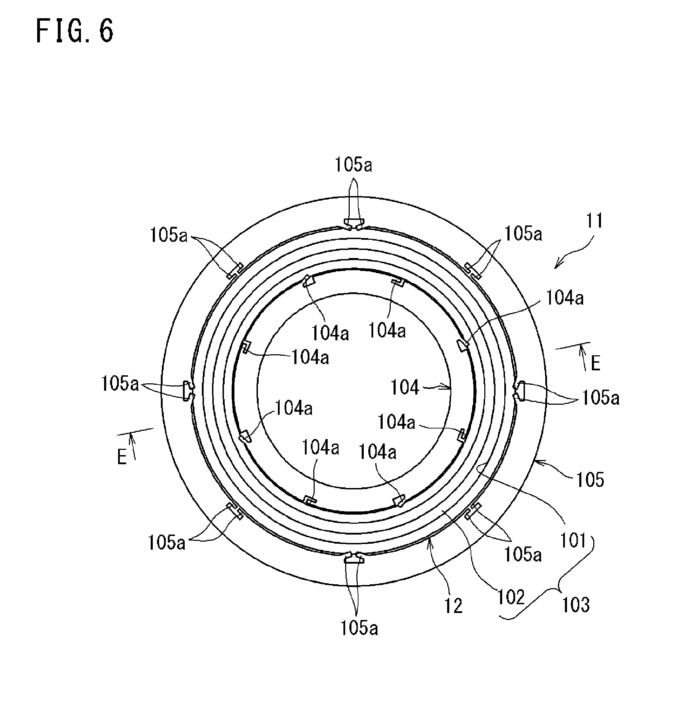

Conventionally, a spiral gasket is arranged between sealing surfaces which face each other in an opposed manner at a connection portion of a pipe which constitutes a flow passage of a fluid such as a gas or a liquid for preventing leakage of the fluid. As such a spiral gasket, as shown in FIG. 6 and FIG, 7, there has been known a spiral gasket which includes: an annular gasket body 103 which is formed in a spiral shape by overlapping a hoop member 101 formed of a metal-made thin plate in a strip shape and a filler member 102 in a strip shape formed of a soft material such as expanded graphite or fluoric resin to each other and winding them in a spiral shape; and an inner ring 104 and an outer ring 105 which are mounted on an inner periphery and an outer periphery of the gasket body 103 respectively as reinforcing ring members (see patent literature 1, for example).

The spiral gasket is used in a state where the spiral gasket is mounted between opposedly facing sealing surfaces 201. In this case, the spiral gasket ensures sealing property between the sealing surfaces 201 by fastening these sealing surfaces 201 such that the sealing surfaces 201 approach each other thus applying a predetermined fastening pressure to the gasket body 103 from both end surfaces in the axial direction.

The inner ring 104 and the outer ring 105 have a plurality of inner ring pawl portions 104a and a plurality of outer ring pawl portions 105a in the vicinity of the gasket body 103 at predetermined intervals along the circumferential direction respectively for detachably mounting the inner ring 104 and the outer ring 105 on the gasket body 103. The inner ring pawl portions 104a and the outer ring pawl portions 105a are pushed toward a gasket body 103 side and hence, the inner ring pawl portions 104a and the outer ring pawl portions 105a are engaged with the gasket body 103. Due to such a constitution, when a lifetime of the gasket body 103 comes to an end, only the gasket body 103 is replaced with the new one and the inner ring 104 and the outer ring 105 can be reused.

### CITATION LIST

### [PATENT LITERATURE]

Patent Literature 1: Japanese Patent No 3938093.

### SUMMARY OF INVENTION

### TECHNICAL PROBLEM

The gasket body 103 is fastened and compressed in the axial direction by the opposedly facing sealing surfaces 201 at the time of mounting the gasket body 103 and hence, an inner peripheral side of the gasket body 103 is elastically deformed in such a manner that the gasket body 103 bulges inwardly in the radial direction and presses an outer peripheral surface of the inner ring 104. In the same manner, an outer peripheral side of the gasket body 103 is elastically deformed in such a manner that the gasket body 103 bulges outwardly in the radial direction and presses an inner peripheral surface of the outer ring 105. Accordingly, when a fastening pressure is excessively increased, a pressing force of the gasket body 103 is increased so that the inner ring 104 and the outer ring 105 are deformed thus giving rise to a drawback that the inner ring 104 and the outer ring 105 cannot be reused.

The present invention has been made in view of the above-mentioned drawbacks, and it is an object of the present invention to provide a spiral gasket which can suppress the deformation of an inner ring and an outer ring caused by applying of an excessively large fastening pressure to a gasket body.

### SOLUTION TO PROBLEM

The spiral gasket of the present invention includes: a gasket body including: a body portion which is formed in a spiral shape by overlapping a hoop member formed of a metal-made thin plate in a strip shape and a filler member formed of a soft material in a strip shape to each other; an inner peripheral empty winding portion which is formed on an inner periphery of the body portion and on which only the hoop member is wound; and an outer peripheral empty winding portion which is formed on an outer periphery of the body portion and on which only the hoop member is wound; an inner ring which is arranged radially inside the inner peripheral empty winding portion of the gasket body and having an outer peripheral surface on which an inner ring pawl portion engageable with an inner peripheral surface of the inner peripheral empty winding portion is formed; and an outer ring which is arranged radially outside the outer peripheral empty winding portion of the gasket body and having an inner peripheral surface on which an outer ring pawl portion engageable with an outer peripheral surface of the outer peripheral empty winding portion is formed, wherein the number of turns of the inner peripheral empty winding portion and the number of turns of the outer peripheral empty winding portion are set to 5 to 10, a predetermined first gap is formed between the inner peripheral surface of the inner peripheral empty winding portion and a portion of the outer peripheral surface of the inner ring except for the inner ring pawl portion, and a predetermined second gap is formed between the outer peripheral surface of the outer peripheral empty winding portion and a portion of the inner peripheral surface of the outer ring except for the outer ring pawl portion.

According to the present invention, the number of turns of the inner peripheral empty winding portion of the gasket portion and the number of turns of the outer peripheral empty winding portion of the gasket portion are set to the slightly large number, that is, 5 to 10 and hence, when the gasket body is fastened by the opposedly facing sealing surfaces, it is possible to suppress the inner peripheral empty winding portion from bulging inwardly in the radial direction and, at the same time, it is possible to suppress the outer peripheral empty winding portion from bulging outwardly in the radial direction. Further, a predetermined first gap is formed between the inner peripheral surface of the inner peripheral empty winding portion and the outer peripheral surface of the inner ring, and a predetermined second gap is formed between the outer peripheral surface of the outer peripheral empty winding portion and the inner peripheral surface of the outer ring. Due to such a constitution, when the gasket body is fastened by the opposedly facing sealing surfaces, it is possible to allow the gasket body to bulge inwardly in the radial direction by an amount corresponding to the first gap as well as outwardly in the radial direction by an amount corresponding to the second gap. Accordingly, a pressing force that the inner peripheral surface of the gasket body presses the outer peripheral surface of the inner ring inwardly in the radial direction, and a pressing force that the outer peripheral surface of the gasket body presses the inner peripheral surface of the outer ring outwardly in the radial direction can be lowered and hence, even when an excessively large fastening pressure acts on the gasket body, it is possible to effectively suppress the deformation of the inner ring and the outer ring caused by the pressing forces. As the result, a reuse rate of the inner ring and the outer ring can be enhanced.

It is also preferable that a thickness of the inner ring in the axial direction and a thickness of the outer ring in the axial direction are substantially equal and are set smaller than a thickness of the gasket body in the axial direction, and the first gap and the second gap are set to values 0.5 to 1.0 times larger than the difference between the thickness of the gasket body in the axial direction and the thickness of the inner ring or the outer ring in the axial direction.

In this case, the first gap and the second gap can be set to appropriate lengths for allowing the gasket body to bulge inwardly in the radial direction and outwardly in the radial direction and hence, a pressing force which acts on the inner ring and the outer ring can be effectively lowered.

It is also preferable that the first gap and the second gap are set such that, in a state where the gasket body is compressed to an extent that the thickness of the gasket body in the axial direction becomes equal to the thickness of the inner ring or the outer ring in the axial direction, the inner peripheral surface of the inner peripheral empty winding portion is brought into contact with the outer peripheral surface of the inner ring, and the outer peripheral surface of the outer peripheral empty winding portion is brought into contact with the inner peripheral surface of the outer ring.

In this case, even when the gasket body is excessively compressed to an extent that the thickness of the gasket body in the axial direction becomes equal to the thickness of the inner ring or the outer ring in the axial direction, a pressing force which acts on the inner ring and the outer ring can be effectively lowered.

It is also preferable that a compression density of the gasket body in a compressed state is set 20 to 50% larger than a non-compression density of the gasket body before being compressed with reference to the non-compression density. In this case, a pressing force which acts on the inner ring and the outer ring can be further effectively lowered.

It is also preferable that the non-compression density is 3.0 to 5.0g/cm³ and the compression density is 4.0 to 6.0g/cm³. In this case, a pressing force which acts on the inner ring and the outer ring can be further effectively lowered.

### ADVANTAGEOUS EFFECTS OF INVENTION

According to the spiral gasket of the present invention, even when an excessively large fastening pressure acts on the gasket body, the deformation of the inner ring and the outer ring can be effectively suppressed and hence, a reuse rate of the inner ring and the outer ring can be enhanced.

### BRIEF DESCRIPTION OF DRAWINGS

[FIG. 1] FIG. 1 is a plan view of a spiral gasket according to one embodiment of the present invention.
[FIG. 2] FIG. 2 is a cross-sectional view taken along a line A-A in FIG. 1 as viewed in the arrow direction showing a use state of the spiral gasket.
[FIG. 3A] FIG. 3A is a cross-sectional view taken along a line B-B in FIG. 1 as viewed in the arrow direction.
[FIG. 3B] FIG. 3B is a cross-sectional view taken along a line C-C in FIG. 1 as viewed in the arrow direction.
[FIG. 4] FIG. 4 is a cross-sectional view taken along a line D-D in FIG. 1 as viewed in the arrow direction showing a state before the spiral gasket is mounted between opposedly facing sealing surfaces.
[FIG. 5] FIG. 5 is a cross-sectional view taken along a line D-D in FIG. 1 as viewed in the arrow direction showing a state where an excessively large fastening pressure acts on a gasket body in a use state of the spiral gasket.
[FIG. 6] FIG. 6 is a plan view showing a conventional spiral gasket.

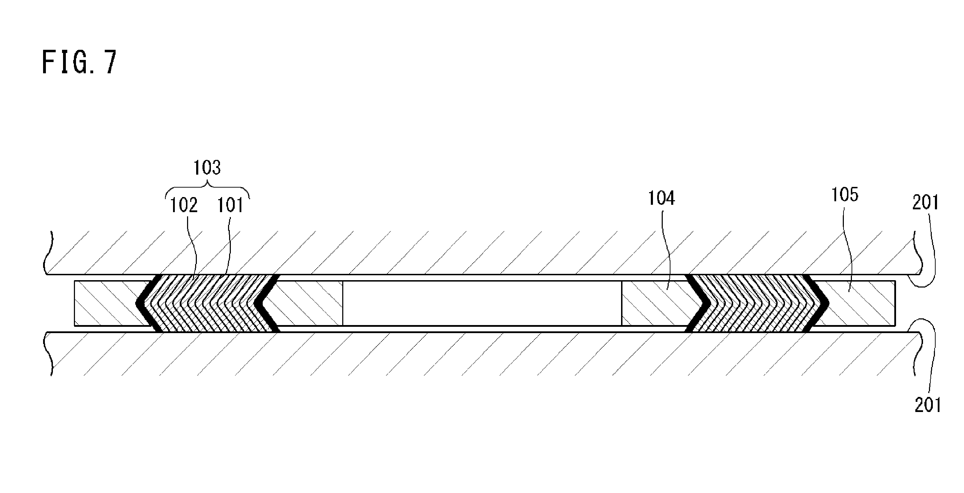

[FIG. 7] FIG. 7 is a cross-sectional view taken along a line E-E in FIG. 6 as viewed in the arrow direction.

### DESCRIPTION OF EMBODIMENTS

Hereinafter, an embodiment of a spiral gasket of the present invention is explained.

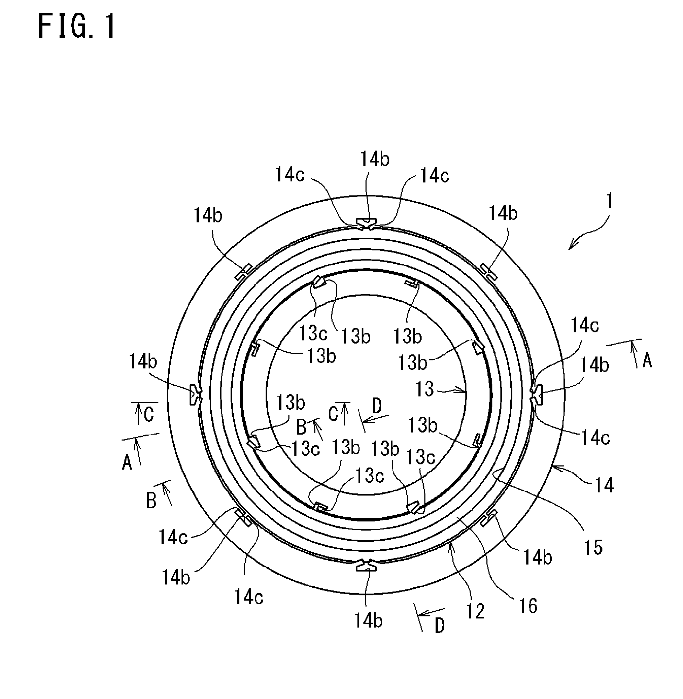

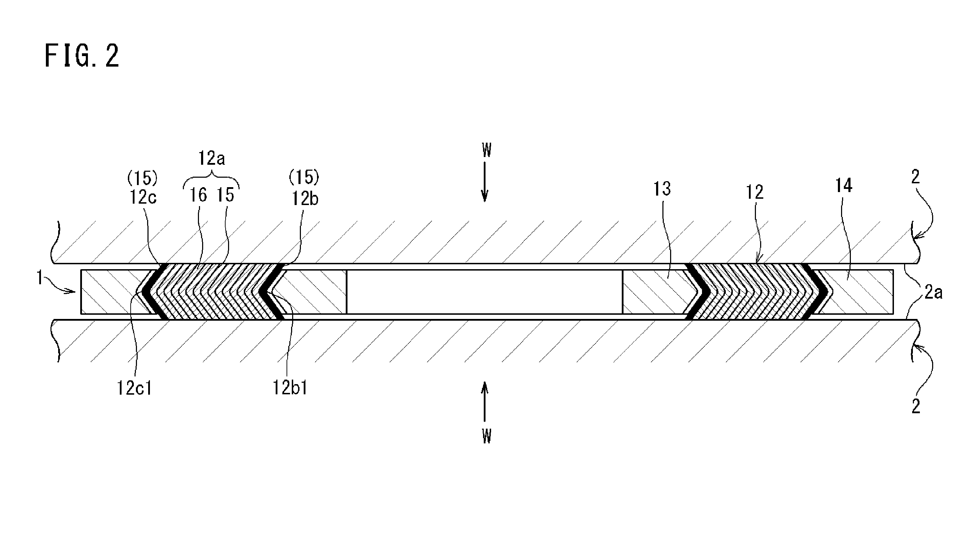

FIG. 1 is a plan view of the spiral gasket according to one embodiment of the present invention. FIG. 2 is a cross-sectional view taken along a line A-A in FIG. 1 as viewed in the arrow direction showing a use state of the spiral gasket. In FIG. 1, the spiral gasket 1 includes: an annular gasket body 12; an inner ring 13 which constitutes a reinforcing ring member which is detachably mounted on an inner peripheral side of the gasket body 12; and an outer ring 14 which constitutes a reinforcing ring member detachably mounted on an outer peripheral side of the gasket body 12.

As shown FIG. 2, the spiral gasket 1 is mounted between sealing surfaces 2a of a pair of flanges 2 which faces each other in an opposed manner at a connection portion of a pipe, for example. The spiral gasket 1 ensures sealing property between both sealing surfaces 2a by fastening these sealing surfaces 2a such that the sealing surfaces 2a approach each other thus applying a predetermined fastening pressure W to the gasket body 12 from both sides in the axial direction.

The gasket body 12 is constituted of: a body portion 12a; an inner peripheral empty winding portion 12b formed on an inner periphery of the body portion 12a; and an outer peripheral empty winding portion 12c formed on an outer periphery of body portion 12a. The body portion 12a is constituted by overlapping and winding in a spiral manner a hoop member 15 formed of a metal (stainless steel or the like) thin plate in a strip shape, and a filler member 16 in a strip shape formed of a soft material (expanded graphite or the like) having the same width as the hoop member 15.

The inner peripheral empty winding portion 12b and the outer peripheral empty winding portion 12c are formed by winding only the hoop member 15 without interposing the filler member 16 therebetween. The number of turns is set to 5 to 10. A V-shaped groove 12b1 which is recessed outwardly in the radial direction along the circumferential direction is formed on an inner peripheral surface of the inner peripheral empty winding portion 12b, while a crest-like bulging portion 12c1 which bulges outwardly in the radial direction along the circumferential direction is formed on an outer peripheral surface of the outer peripheral empty winding portion 12c. By securely fixing by spot welding or the like respective end portions of the inner peripheral empty winding portion 12b and the outer peripheral empty winding portion 12c to the inner peripheral empty winding portion 12b and the outer peripheral empty winding portion 12c in an overlapping manner respectively, one annular gasket body 12 is formed as the whole.

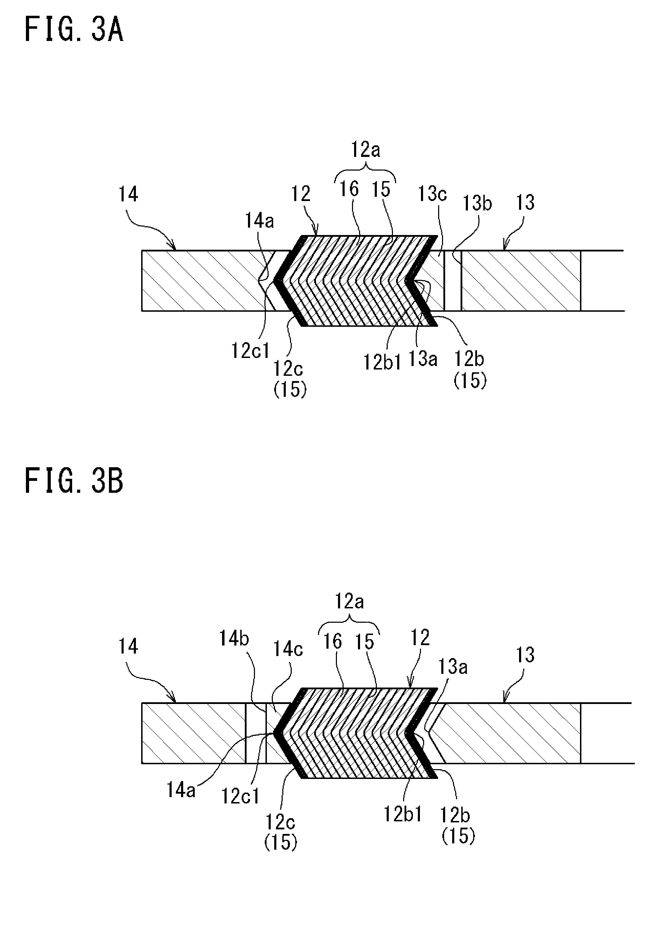

FIG. 3A is a cross-sectional view taken along a line B-B in FIG. 1 as viewed in the arrow direction, and FIG. 3B is a cross-sectional view taken along a line C-C in FIG. 1 as viewed in the arrow direction. In FIG. 3A, the inner ring 13 is formed into an annular shape using a metal material such as a cold-rolled steel plate or a stainless steel plate, and the inner ring 13 is arranged inside the inner peripheral empty winding portion 12b of the gasket body 12 in the radial direction. Chamfering is applied to an outer periphery of the inner ring 13 over the whole circumference so that a projecting ridge 13a is formed on an outer peripheral surface of the inner ring 13 in an extending manner along the circumferential direction.

On the outer peripheral surface of the inner ring 13, for example, eight L-shaped inner ring notched portions 13b arranged at equal intervals in the circumferential direction (see FIG. 1), and inner ring pawl portions 13c arranged in a state where a single inner ring pawl portion 13c is arranged adjacent to each inner ring notched portion 13b are formed.

The inner ring pawl portion 13c is detachably engaged with an inner peripheral surface of the inner peripheral empty winding portion 12b of the gasket body 12. To be more specific, with respect to the inner ring pawl portions 13c arranged adjacent to the respective inner ring notched portions 13b, a distal end of every one other inner ring pawl portion 13c is pushed outwardly in the radial direction (toward the gasket body 12) (see FIG. 1). Due to the engagement of the projecting ridge 13a formed on the surface of the inner ring pawl portion 13c which faces the gasket body 12 in an opposed manner with the V-shaped groove 12b1 formed on the inner peripheral empty winding portion 12b of the gasket body 12, the inner ring 13 and the gasket body 12 are integrally formed with each other.

In this embodiment, the inner ring pawl portions 13c of the inner ring notched portions 13b are pushed outwardly for every one other in the circumferential direction. However, the inner ring pawl portions 13c arranged adjacent to all inner ring notched portions 13b in the circumferential direction may be pushed outwardly.

In FIG. 3B, the outer ring 14 is formed annularly using a metal material such as a cold-rolled steel plate or a stainless steel plate in the same manner as the inner ring 13, and the outer ring 14 is arranged outside the outer peripheral empty winding portion 12c of the gasket body 12 in the radial direction. On the inner periphery of the outer ring 14, a V-shaped groove 14a is formed in an extending manner along the circumferential direction such that the V-shaped groove 14a conforms to the bulging portion 12c1 of the gasket body 12.

On the inner peripheral surface of the outer ring 14, for example, eight T-shaped outer ring notched portions 14b arranged at equal intervals in the circumferential direction (see FIG. 1), and outer ring pawl portions 14c arranged in a state where two outer ring pawl portions 14c are arranged adjacent to each outer ring notched portion 14b are formed.

The outer ring pawl portion 14c is detachably engaged with an outer peripheral surface of the outer peripheral empty winding portion 12c of the gasket body 12. To be more specific, with respect to two outer ring pawl portions 14c arranged adjacent to each outer ring notched portion 14b, the respective distal ends of two outer ring pawl portions 14c are pushed inwardly in the radial direction (toward the gasket body 12) for every one other in the circumferential direction (see FIG. 1). Due to the engagement of the bulging portion 12c1 of the gasket body 12 with the V-shaped groove 14a formed on the surface of the outer ring pawl potion 14c which faces the gasket body 12 in an opposed manner, the outer ring 14 and the gasket body 12 are integrally formed with each other.

In this embodiment, two outer ring pawl portions 14c are pushed outwardly for every one other outer ring notched portion 14b in the circumferential direction. However, the outer ring pawl portions 14c arranged adjacent to all outer ring notched portions 14b in the circumferential direction may be pushed out, or only one of two outer ring pawl portions 14c arranged adjacent to each outer ring notched portion 14b may be pushed outwardly.

In the spiral gasket 1 having the above-mentioned constitution, the inner ring 13 and the outer ring 14 can be easily assembled to the gasket body 12 using the inner ring pawl portions 13c and outer ring pawl portions 14c. Accordingly, the gasket body 12 whose lifetime has expired can be easily exchanged with the new gasket body 12. As the result, the inner ring 13 and the outer ring 14 can be effectively reused.

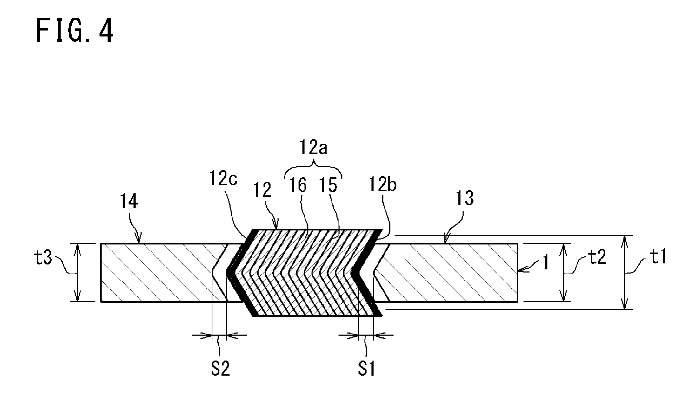

FIG. 4 is a cross-sectional view taken along a line D-D in FIG. 1 as viewed in the arrow direction showing a state before the spiral gasket 1 is mounted between opposedly facing sealing surfaces 2a (a state where the spiral gasket 1 is not yet compressed). In FIG. 4, a thickness t2 of the inner ring 13 in the axial direction and a thickness t3 of the outer ring 14 in the axial direction are set substantially equal to each other, and these thicknesses t2 and t3 are set smaller than a thickness t1 of the gasket body 12 in the axial direction. Accordingly, when a fastening pressure W is applied to the gasket body 12 by fastening the sealing surfaces 2a to each other, as shown in FIG. 2, the respective sealing surfaces 2a compress the gasket body 12 in the axial direction to an extent that the respective sealing surfaces 2a are not brought into contact with both end surfaces of the inner ring 13 and the outer ring 14 in the axial direction and hence, the above-mentioned fastening pressure W assumes an appropriate value.

Here, "substantially equal" includes a case where the thickness t2 of the inner ring 13 and the thickness t3 of the outer ring 14 slightly differ from each other besides the case where the thickness t2 of the inner ring 13 and the thickness t3 of the outer ring 14 are equal to each other. In this embodiment, the explanation is made with respect to the case where the thicknesses t2 and t3 are set equal to each other.

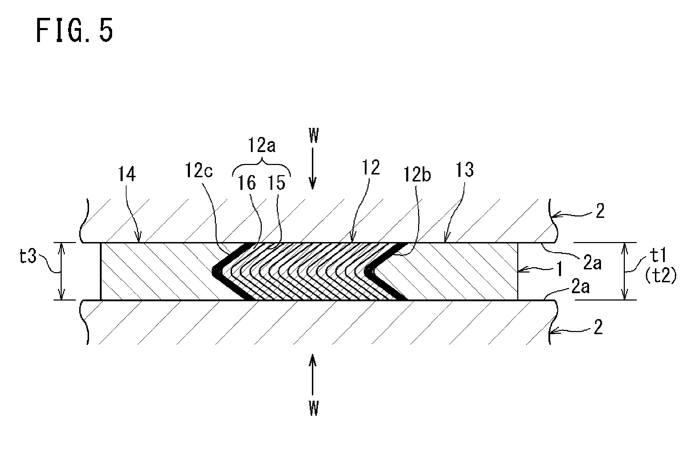

In using the spiral gasket 1, as shown in FIG. 5, there may be a case where when the opposedly facing sealing surfaces 2a are excessively fastened, the gasket body 12 is compressed to an extent that the thickness t1 of the gasket body 12 becomes equal to the thickness t2 of the inner ring 13 (the thickness t3 of the outer ring 14, the same being applied hereinafter), that is, to an extent that the respective sealing surfaces 2a are brought into contact with both end surfaces of the inner ring 13 and the outer ring 14 in the axial direction. In such a case, an excessively large fastening pressure W acts on the gasket body 12 and hence, the gasket body 12 is further elastically deformed such that the gasket body 12 bulges inwardly in the radial direction as well as outwardly in the radial direction. The spiral gasket 1 according to this embodiment is constituted such that even when such elastic deformation is generated, it is possible to suppress a pressing force from the gasket body 12 from acting on the outer peripheral surface of the inner ring 13 and the inner peripheral surface of the outer ring 14.

To be more specific, as shown in FIG. 4, a predetermined first gap S1 is formed between the inner peripheral surface of the inner peripheral empty winding portion 12b of the gasket body 12 and a portion of the outer peripheral surface of the inner ring 13 except for the inner ring notched portions 13b and the inner ring pawl portions 13c. Further, a predetermined second gap S2 is formed between the outer peripheral surface of the outer peripheral empty winding portion 12c of the gasket body 12 and a portion of the inner peripheral surface of the outer ring 14 except for the outer ring notched portions 14b and the outer ring pawl portions 14c.

The first gap S1 and the second gap S2 are set to values 0.5 to 1.0 times larger than the difference (t1 - t2) between the thickness t1 of the gasket body 12 and the thickness t2 of the inner ring 13. It is more preferable that the first gap S1 and the second gap S2 are set such that, as shown in FIG. 5, in a state where the gasket body 12 is compressed to an extent that the thickness t1 of the gasket body 12 becomes equal to the thickness t2 of the inner ring 13, the inner peripheral surface of the inner peripheral empty winding portion 12b is brought into contact with the outer peripheral surface of the inner ring 13, and the outer peripheral surface of the outer peripheral empty winding portion 12c is brought into contact with the inner peripheral surface of the outer ring 14. In this embodiment, since the above-mentioned difference (t1 - t2) is 1.5 mm and hence, the first gap S1 and the second gap S2 are set to values which fall within a range from 0.75 to 1.5 mm.

In the spiral gasket 1 according to this embodiment, to suppress the above-mentioned pressing force from acting, a compression density σb of the gasket body 12 when the gasket body 12 is compressed by the opposedly facing sealing surfaces 2a is set smaller than a compression density of a conventional gasket body.

To be more specific, the above-mentioned compression density σb is set 20 to 50% larger than a non-compression density σa of the gasket body 12 before being compressed by the opposedly facing sealing surfaces 2a with reference to the non-compression density σa. It is more preferable that the non-compression density σa is set to a value which falls within a range from 3.0 to 5.0 g/cm³, and the compression density σb is set to a value which falls within a range from 4.0 to 6.0 g/cm³.

The above-mentioned non-compression density σa can be set by adjusting a winding load at the time of winding the body portion 12a of the gasket body 12 in a spiral shape, for example. In this embodiment, the body portion 12a is wound loosely such that a winding load at the time of winding the body portion 12a of the gasket body 12 in a spiral shape becomes smaller than a conventional winding load. Due to such a winding operation, the above-mentioned non-compression density σa can be set to a value which falls within the above-mentioned range.

In the spiral gasket 1 according to this embodiment, the compression density σb of the gasket body 12 when the gasket body 12 is compressed by the opposedly facing sealing surfaces 2a is set smaller than the compression density of the conventional gasket body. However, a compression rate of the gasket body 12 when the gasket body 12 is compressed may be set higher than a compression rate of the conventional gasket body.

According to the spiral gasket 1 of this embodiment having the above-mentioned constitution, the number of turns of the inner peripheral empty winding portion 12b of the gasket body 12 and the number of turns of the outer peripheral empty winding portion 12c of the gasket body 12 are set to slightly large number, that is, 5 to 10. Accordingly, it is possible to suppress the inner peripheral empty winding portion 12b from bulging inwardly in the radial direction and to suppress the outer peripheral empty winding portion 12c from bulging outwardly in the radial direction when the gasket body 12 is fastened by the opposedly facing sealing surfaces 2a. Further, the first gap S1 is formed between the inner peripheral surface of the inner peripheral empty winding portion 12b and the outer peripheral surface of the inner ring 13, and the second gap S2 is formed between the outer peripheral surface of the outer peripheral empty winding portion 12c and the inner peripheral surface of the outer ring 14. Due to such a constitution, when the gasket body 12 is fastened by the opposedly facing sealing surfaces 2a, it is possible to allow the gasket body 12 to bulge inwardly in the radial direction by an amount corresponding to the first gap S1 as well as to bulge outwardly in the radial direction by an amount corresponding to the second gap S2. Accordingly, a pressing force that the inner peripheral surface of the gasket body 12 presses the outer peripheral surface of the inner ring 13 inwardly in the radial direction, and a pressing force that the outer peripheral surface of the gasket body 12 presses the inner peripheral surface of the outer ring outwardly in the radial direction can be lowered and hence, even when an excessively large fastening pressure W acts on the gasket body 12, it is possible to effectively suppress the deformation of the inner ring 13 and the outer ring 14 caused by the pressing forces. As the result, a reuse rate of the inner ring 13 and the outer ring 14 can be enhanced.

By setting the first gap S1 and the second gap S2 to values 0.5 to 1.0 times larger than the difference (t1 - t2) between the thickness t1 of the gasket body 12 and the thickness t2 of the inner ring 13, the first gap S1 and the second gap S2 can be set to appropriate lengths for allowing the gasket body 12 to bulge inwardly in the radial direction and outwardly in the radial direction and hence, a pressing force which acts on the inner ring 13 and the outer ring 14 can be effectively lowered.

The first gap S1 and the second gap S2 are set such that, in a state where the gasket body 12 is compressed to an extent that the thickness t1 of the gasket body 12 becomes equal to the thickness t2 of the inner ring 13, the inner peripheral surface of the inner peripheral empty winding portion 12b is brought into contact with the outer peripheral surface of the inner ring 13, and the outer peripheral surface of the outer peripheral empty winding portion 12c is brought into contact with the inner peripheral surface of the outer ring 14. Due to such a constitution, even when the gasket body 12 is excessively compressed to an extent that the thickness t1 of the gasket body 12 becomes equal to the thickness t2 of the inner ring 13, a pressing force which acts on the inner ring 13 and the outer ring 14 can be effectively lowered.

By setting a compression density σb of the gasket body 12 in a compressed state to 20 to 50% larger than a non-compression density σa of the gasket body 12 before being compressed with reference to the non-compression density σa, a pressing force which acts on the inner ring 13 and the outer ring 14 can be further effectively lowered.

Further, by setting the non-compression density σa of the gasket body 12 to 3.0 to 5.0 g/cm³ and by setting the compression density σb of the gasket body 12 after being compressed to 4.0 to 6.0 g/cm³, a pressing force which acts on the inner ring 13 and the outer ring 14 can be further effectively lowered.

The present invention is not limited to the above-mentioned embodiment. For example, although the thickness t2 of the inner ring 13 and the thickness t3 of the outer ring 14 are set equal to each other in this embodiment, the thickness t2 of the inner ring 13 and the thickness t3 of the outer ring 14 may be set to values slightly different from each other provided that the thickness t2 of the inner ring 13 and the thickness t3 of the outer ring 14 are set smaller than the thickness t1 of the gasket body 12.

In this case, the first gap S1 and the second gap S2 may be set using the larger thickness out of the thickness t2 of the inner ring 13 and the thickness t3 of the outer ring 14. For example, when the relationship of t2 < t3 is established, the first gap S1 and the second gap S2 may be set to values 0.5 to 1.0 times larger than the difference (t1 - t3) between the thickness t1 of the gasket body 12 and the thickness t3 of the outer ring 14. Further, the first gap S1 and the second gap S2 may be set such that, in a state where the gasket body 12 is compressed to an extent that the thickness t1 of the gasket body 12 becomes the thickness t3 of the outer ring 14, the inner peripheral surface of the inner peripheral empty winding portion 12b is brought into contact with the outer peripheral surface of the inner ring 13, and the outer peripheral surface of the outer peripheral empty winding portion 12c is brought into contact with the inner peripheral surface of the outer ring 14.

### REFERENCE SIGNS LIST

1: SPIRAL GASKET
12: GASKET BODY
12a: BODY PORTION
12b: INNER PERIPHERAL EMPTY WINDING PORTION
12c. OUTER PERIPHERAL EMPTY WINDING PORTION
13: INNER RING
13c: INNER RING PAWL PORTION
14: OUTER RING
14: OUTER RING PAWL PORTION
15: HOOP MEMBER
16: FILLER MEMBER
S1: FIRST GAP
S2: SECOND GAP

## Claims

1. A spiral gasket comprising:
a gasket body including: a body portion which is formed in a spiral shape by overlapping a hoop member formed of a metal-made thin plate in a strip shape and a filler member formed of a soft material in a strip shape to each other; an inner peripheral empty winding portion which is formed on an inner periphery of the body portion and on which only the hoop member is wound; and an outer peripheral empty winding portion which is formed on an outer periphery of the body portion and on which only the hoop member is wound;
an inner ring which is arranged radially inside the inner peripheral empty winding portion of the gasket body and having an outer peripheral surface on which an inner ring pawl portion engageable with an inner peripheral surface of the inner peripheral empty winding portion is formed; and
an outer ring which is arranged radially outside the outer peripheral empty winding portion of the gasket body and having an inner peripheral surface on which an outer ring pawl portion engageable with an outer peripheral surface of the outer peripheral empty winding portion is formed, wherein
the number of turns of the inner peripheral empty winding portion and the number of turns of the outer peripheral empty winding portion are set to 5 to 10,
a predetermined first gap is formed between the inner peripheral surface of the inner peripheral empty winding portion and a portion of the outer peripheral surface of the inner ring except for the inner ring pawl portion, and
a predetermined second gap is formed between the outer peripheral surface of the outer peripheral empty winding portion and a portion of the inner peripheral surface of the outer ring except for the outer ring pawl portion.

2. The spiral gasket according to claim 1, wherein a thickness of the inner ring in the axial direction and a thickness of the outer ring in the axial direction are substantially equal and are set smaller than a thickness of the gasket body in the axial direction, and
the first gap and the second gap are set to values 0.5 to 1.0 times larger than the difference between the thickness of the gasket body in the axial direction and the thickness of the inner ring or the outer ring in the axial direction.

3. The spiral gasket according to claim 2, wherein the first gap and the second gap are set such that, in a state where the gasket body is compressed to an extent that the thickness of the gasket body in the axial direction becomes equal to the thickness of the inner ring or the outer ring in the axial direction, the inner peripheral surface of the inner peripheral empty winding portion is brought into contact with the outer peripheral surface of the inner ring, and the outer peripheral surface of the outer peripheral empty winding portion is brought into contact with the inner peripheral surface of the outer ring.

4. The spiral gasket according to claim 3, wherein a compression density of the gasket body in a compressed state is set to 20 to 50% larger than a non-compression density of the gasket body before being compressed with reference to the non-compression density.

5. The spiral gasket according to claim 4, wherein the non-compression density is 3.0 to 5.0 g/cm³ and the compression density is 4.0 to 6.0 g/cm³.
